# EUROPÄISCHE PATENTSCHRIFT

(11) **EP 1 101 153 B1**
(45) Veröffentlichungstag und Bekanntmachung des Hinweises auf die Patenterteilung: **27.10.2004**
(21) Anmeldenummer: 99952245.1
(22) Anmeldetag: 03.08.1999
(51) Int. Cl.: G05B 19/00

(54) **VERFAHREN ZUM APPLIZIEREN VON STEUERDATEN EINES ELEKTRONISCHEN KRAFTFAHRZEUG-STEUERGERÄTS**
METHOD FOR APPLYING THE CONTROL DATA OF AN ELECTRONIC VEHICLE CONTROL APPARATUS
PROCEDE POUR L'APPLICATION DE DONNEES DE COMMANDE D'UN APPAREIL DE COMMANDE ELECTRONIQUE DE VEHICULE AUTOMOBILE

(30) Priorität: 13.08.1998 DE 19836748
(43) Veröffentlichungstag der Anmeldung: 23.05.2001
(73) Patentinhaber: SIEMENS AKTIENGESELLSCHAFT, 80333 München (DE)
(72) Erfinder: EITING, Thomas, D-93057 Regensburg (DE); LINDNER, Klaus, D-93105 Tegernheim (DE); LOIBL, Josef, D-94209 Regen (DE)
(86) Internationale Anmeldenummer: PCT/DE1999/002373
(87) Internationale Veröffentlichungsnummer: WO 2000/010060

(56) Entgegenhaltungen:
- EP-A- 0 589 067
- DE-A- 4 107 052
- DE-A- 19 500 453

## Beschreibung

Die Erfindung betrifft ein Verfahren zum Applizieren von Steuerdaten eines (oder mehrerer) Kraftfahrzeug-Steuergeräts, das einen nichtflüchtigen Speicher, insbesondere einen Flash-Speicher, zum Speichern der Steuerdaten enthält. Unter "Applizieren" wird hierbei das Anpassen, Abstimmen und/oder Aktualisieren von Steuerdaten verstanden, die den aktuellen Betrieb des zugehörigen Kraftfahrzeug-Steuergeräts beeinflussen. Die Applikation kann beispielsweise in Abhängigkeit vom jeweiligen Steuergerätetyp, Kraftfahrzeugtyp oder dem aktuellen Betriebsverhalten der zu steuernden Kraftfahrzeugkomponente, beispielsweise eines Motorgetriebes, erfolgen, um hierdurch eine Optimierung des Betriebsverhaltens der gesteuerten Kraftfahrzeugkomponente und damit des gesamten Kraftfahrzeugs zu erzielen.

In jüngerer Zeit ist der Trend erkennbar, eigenständig vorgesehene elektronische Steuergeräte ("stand alone" - Steuergeräte) vermehrt durch integrierte mechatronische Geräte zu ersetzen, bei denen zusätzlich zum Elektronikbereich (beispielsweise einer Getriebeelektronikschaltung, die auf einem Substrat, beispielsweise aus Keramik, basiert) Mechanikkomponenten (beispielsweise Sensoren und Aktoren auf einem Kunststoff-Tragekörper sowie elektrische Verbindungselemente) vorgesehen sind. Solche mechatronischen Steuergeräte können beispielsweise zur Motorsteuerung, Getriebesteuerung, ABS-Steuerung und dergleichen eingesetzt werden. Die Erfindung bezieht sich sowohl auf solche mechatronischen Steuergeräte als auch auf rein elektronische Steuergeräte. Allgemein ist in Steuergeräten der zur Verfügung stehende Bauraum in der Regel begrenzt, so daß die Elektronikkomponenten sehr kompakt auszulegen sind.

Zum Applizieren von Kraftfahrzeug-Funktionen sind in der Regel in einem nichtflüchtigen Speicher Parameter, Kennlinien und Kennfelder enthalten. Bei bereits vorgeschlagenen Applikationsverfahren ist eine Änderung der zu applizierenden Daten (Applikationsdaten), das heißt der abzustimmenden Betriebsdaten, nur "offline", nicht aber "online" möglich, was eine rasche, beispielsweise betriebszustandsabhängig optimierte Applikation erschwert. Die applizierten, das heißt geänderten Daten können in diesem Fall nur durch einen kompletten Programmiervorgang aktiviert, d.h. in den Flash-Speicher geladen werden. Zwar ergibt sich der Vorteil, daß eine Applikation mit Serien-Steuergeräten ohne Modifikationen möglich ist, jedoch ergeben sich in der Praxis erhebliche Zeitverzögerungen und umständliche Handhabung, so daß dieses Verfahren nicht sehr effizient ist.

Alternativ kann eine Applikation mit speziellen Applikationsgeräten durchgeführt werden, bei denen der für die zu applizierenden Betriebsdaten vorgesehene Datenbereich des Flash-Speichers durch einen RAM-Speicher ersetzt ist. Diese Vorgehensweise erlaubt eine freie, rasche Änderbarkeit aller Applikationsdaten, erfordert jedoch speziell dafür modifizierte Steuergeräte. Es ist folglich keine Applikation mit Serien-Steuergeräten mehr möglich. Eine weitere überlegenswerte Alternative kann eine Applikation gemäß dem Master-Slave-Konzept sein, bei dem auf dem Ziel-Steuergerät (Slave) nur noch die wesentlichen Ein-Ausgabe-Funktionen laufen. Auf dem Hauptgerät (Master) wird die gesamte Funktionssoftware abgewickelt. Ferner sind auf dem Master-Gerät alle Applikationsdaten vorhanden, die zur Applikation frei änderbar konfiguriert werden können. Auch in diesem Fall ist eine Applikation mit Serien-Steuergeräten nicht mehr möglich. Zudem muß noch sichergestellt werden, daß bei Übergabe des gesamten Funktionsumfangs an das Ziel-Steuergerät das Zeit- und Funktionsverhalten identisch ist mit dem der Master-Slave-Konfiguration.

Der Erfindung liegt die Aufgabe zugrunde, ein Applikationsverfahren zu schaffen, das eine rasche Durchführung einer Applikation ohne Notwendigkeit von speziellen Applikationsgeräten ermöglicht.

Diese Aufgabe wird mit den im Patentanspruch 1 genannten Maßnahmen gelöst. Vorteilhafte Ausgestaltungen der Erfindung sind in den Unteransprüchen angegeben.

Das erfindungsgemäße Verfahren ermöglicht eine effiziente Applikation von Serien-Steuergeräten, das heißt in großen Stückzahlen für die tatsächliche Betriebssteuerung hergestellten und nicht auf eine spezielle Applikationskonzeption ausgelegten Steuergeräten. Es ist keine Modifikation solcher Steuergeräte erforderlich, das heißt es ist weder ein zusätzlicher RAM-Speicher, noch eine ROM-Emulation durch einen RAM usw. notwendig. Ferner ist eine "Online"-Applikation im Kraftfahrzeug möglich, bei der beispielsweise die Daten im RAM-Speicher während der Fahrt abgestimmt (appliziert) werden. Zusätzlich ist jedoch auch die Möglichkeit einer "Offline"-Applikation, zum Beispiel am Labortisch, möglich. Die Datenapplikation (Datenabstimmung bzw. Datenaktualisierung) ist zudem schnell durchführbar, da keinerlei Gerätewechsel oder Geräteeingriff notwendig ist.

Mit der Erfindung wird folglich eine sehr effiziente Systemauslegung für eine Kraftfahrzeugsteuerung, beispielsweise eine integrierte Getriebesteuerung, bereitgestellt. Die Erfindung ist insbesondere auch bei Steuergeräten einsetzbar, die sehr limitierten Speicherumfang besitzen und beispielsweise auf einem Mikrokontroller-Konzept beruhen. Dies erlaubt die Verwendung von einfach und effizient arbeitenden (rein elektronischen oder mechatronischen) Steuergeräten, die kostengünstig sind, geringen Raumbedarf benötigen und sich durch hohe Qualität und Zuverlässigkeit auszeichnen. Es sind jedoch nicht nur solche Steuergeräte mit Mikrokontrollern und integrierten Speicherkonzepten bei der Erfindung einsetzbar, sondern neben Serien-Steuergeräten auch speziell aufgebaute Steuergeräte verwendbar.

Die Erfindung ermöglicht die Verwendung von Steuergeräten, die auf einem Mikrokontroller-Konzept mit effizienter Ausnutzung von Speicher-Resourcen beruhen, ohne daß irgendwelche Änderungen des Hardware-Aufbaus erforderlich sind. Ferner sind keine eigenen Applikationsgeräte notwendig. Der insgesamt für die Applikation erforderliche Speicherplatzbedarf ist sehr gering, da im Flash-Speicher nur ein relativ geringer Speicherumfang für den (zweiten) Speicherbereich bereitgestellt werden muß. Auch der RAM-Speicher muß nur geringe Speicherkapazitäten für die Applikation bereitstellen, da lediglich die zu applizierenden Daten in den RAM-Speicher gelesen werden müssen, während die übrigen, unverändert bleibenden Betriebsdaten zur aktuellen Komponentensteuerung aus dem entsprechenden Speicherbereich des nichtflüchtigen Speichers ausgelesen werden können. Der Steuergeräte-Datensatz im nichtflüchtigen Speicher (insbesondere Flash-Speicher, aber auch EEPROM oder dergleichen) ist erfindungsgemäß variabel konfigurierbar, mit der Option, einzelne Datensegmente mit einer Größe von beispielsweise 1 Kilobyte für die Online-Applikation dynamisch in den RAM-Bereich umzuspeichern und nach der Applikation in den nichtflüchtigen Speicher steuergeräteintern zurückzuspeichern.

Die Erfindung wird nachstehend anhand eines Ausführungsbeispiels unter Bezugnahme auf die Zeichnungen näher erläutert.
- Fig. 1: zeigt ein Blockschaltbild eines zur Ausführung des erfindungsgemäßen Verfahrens geeigneten Ausführungsbeispiels, und
- Fig. 2: zeigt die einzelnen Verfahrensschritte in Verbindung mit der hardwaremäßigen Ausgestaltung des erfindungsgemäßen Konzepts in größeren Einzelheiten.

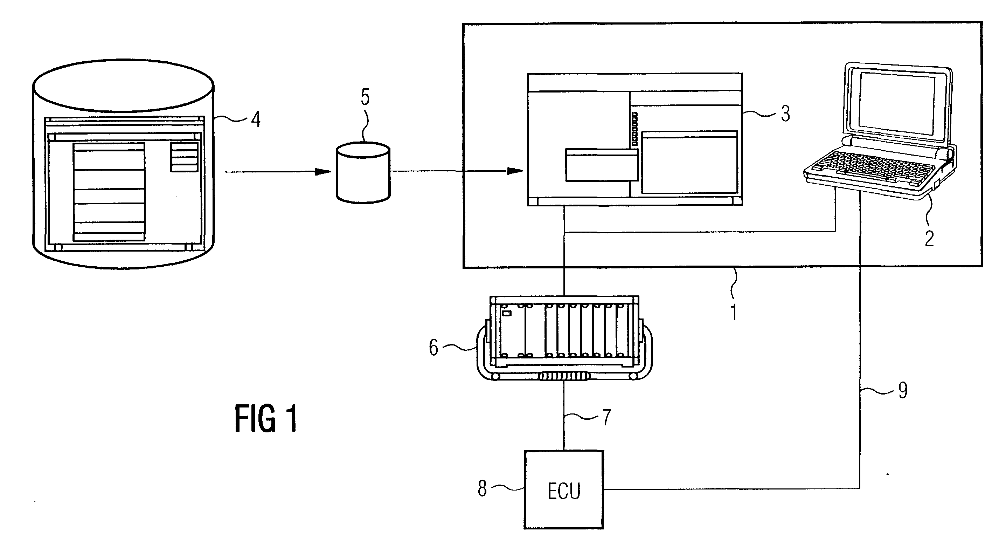

Das in Fig. 1 gezeigte Ausführungsbeispiel umfaßt eine Rechnereinheit 1 zur Applikationssteuerung, die einen tragbaren PC 2 enthalten (oder durch diesen gebildet sein) kann und mit der schematisch mit 3 bezeichneten Applikations-Software einschließlich einer die Speicherverwaltung (Speichern, Lesen, Löschen) bewirkenden Software (Flash-Tool) ausgestattet ist. Die gegebenenfalls zu applizierenden Steuergeräte-Daten werden durch ein Daten-Generierungs-Tool 4 erzeugt oder bereitgestellt, das die Dateien für das Steuergeräte-Programm, das heißt den Quellkode (üblicherweise in der Programmiersprache C geschrieben) liefert. Das Daten-Generierungs-Tool 4 erzeugt ferner eine Datenbeschreibung, beispielsweise mittels einer in Fig. 1 separat dargestellten, regelmäßig durch Software gebildeten Datenbeschreibungseinheit 5, die die Daten zu entsprechenden Datenworten, beispielsweise mit einer die Datenart charakterisierenden Identifikation, Daten-Headern, usw. für den Betrieb der Applikations-Software 3 formt. Die Rechnereinheit 1 bildet eine Benutzer-Schnittstelle, über die die Steuergeräte-Daten ausgelesen und verändert werden können, wobei hierzu Informationen (Datenbeschreibung) der Datenbeschreibungseinheit 5 genutzt werden.

In Fig. 1 ist das zu applizierende Steuergerät, dessen Steuerdaten an den aktuellen oder gewünschten Betrieb angepaßt werden sollen, mit dem Bezugszeichen 8 bezeichnet. Die Kommunikation zwischen dem Steuergerät 8 und der Rechnereinheit 1 kann über eine serielle Leitung 9 und eine serielle Schnittstelle (optional) oder über einen Bus 7 (zum Beispiel CAN) und eine entsprechende Bus-Schnittstelle sowie eine Interface-Schaltung 6 erfolgen. In Fig. 1 sind beide Kommunikationsalternativen gemeinsam realisiert. In der Praxis genügt jedoch auch eine der beiden Kommunikationsverbindungen.

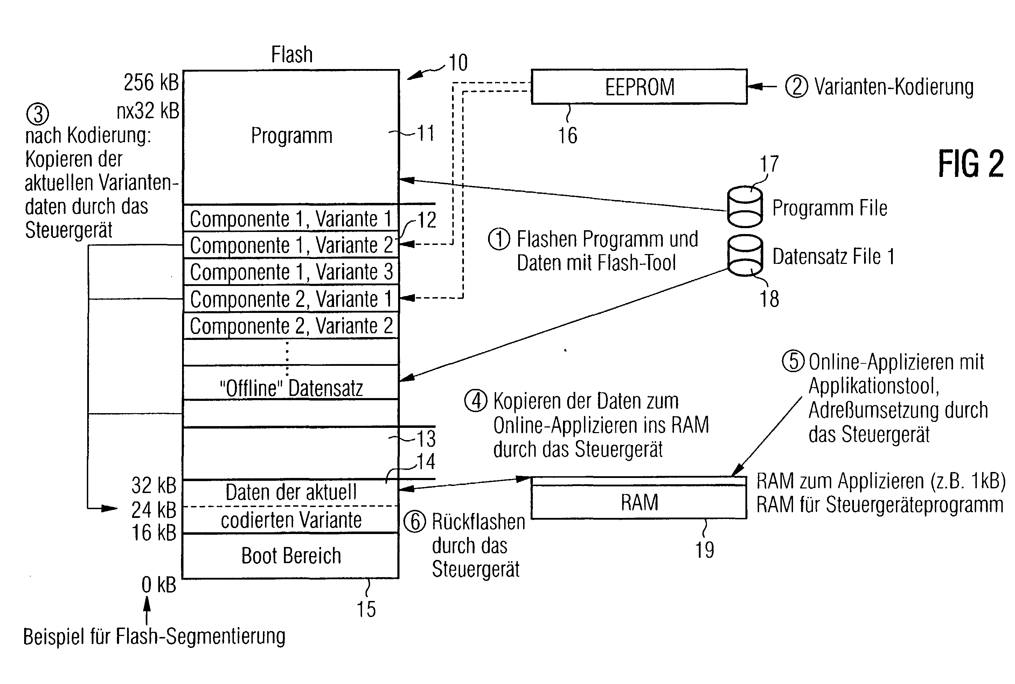

In Fig. 2 ist der speichertechnische Aufbau des Steuergeräts 8, soweit vorliegend relevant, in Verbindung mit einzelnen Programmfunktionsblöcken näher dargestellt. Als nichtflüchtiger Speicher ist ein Flash-Speicher 10 vorgesehen, der einen das Steuergeräte-Programm enthaltenden Speicherabschnitt 11 sowie weitere Speicherabschnitte 12 bis 14 enthält. Zusätzlich ist im Flash-Speicher 10 ein Boot-Bereich 15 zum Hochfahren des nicht dargestellten Prozessors (Mikrokontrollers) des Steuergeräts 8 enthalten. Allgemein bestimmt das im Speicherabschnitt 11 gespeicherte Programm den Arbeitsablauf des Steuergeräts 8, während die in den Speicherbereichen 12 und 14 gespeicherten, gegebenenfalls zu applizierenden Daten den Arbeitsablauf beeinflussen und beispielsweise die Art sowie die Amplitude der Ansteuerung von Ausgangstreibern definieren. Im Speicherbereich 12 des Flash-Speichers 10 ist mindestens ein Steuergeräte-Datensatz enthalten, auf den bei der Steuerung der durch das Steuergerät 8 zu steuernden Kraftfahrzeugfunktion, d.h. der einzelnen hierfür anzusteuernden Komponenten (z.B. Getriebe-Aktoren) zurückgegriffen wird. Vorzugsweise sind jedoch, wie in Fig. 2 gezeigt ist, mehrere alternative Steuergeräte-Datensätze, z.B. für unterschiedliche Kraftfahrzeugtypen, vorgesehen. Für die einzelnen zu steuernden Komponenten "Komponente 1", "Komponente 2" usw. sind gemäß Fig. 2 jeweils drei unterschiedliche Varianten "Variante 1", "Variante 2", "Variante 3" vorgesehen (je nach Auslegung können selbstverständlich auch nur zwei oder aber mehr als drei alternative Steuerdatensätze (Varianten) vorgegeben werden). Die Komponenten stellen hierbei die vom Steuergerät 8 betätigbaren (und gegebenenfalls bei einem mechatronischen Steuergerät in diesem enthaltenen) Ausführungsorgane, zum Beispiel Aktoren, Ventile, Relais und dergleichen dar. Die Varianten berücksichtigen unterschiedliche Fahrzeugtypen, Schaltmuster oder dergleichen, gemäß denen die jeweiligen Komponenten in jeweils unterschiedlicher Weise gesteuert werden sollen.

Wie in Fig. 2 gezeigt ist, werden das Programm und die Steuergerätedaten anfänglich bei einem Schritt 1 in den Speicherbereich 11 bzw. 12 mit Hilfe des in Fig. 1 gezeigten Flash-Tool-Programms 3 aus einem Programm-File (Programm-Datei) 17 bzw. aus einem Datensatz-File (Datensatz-Datei) 18 eingeschrieben. Die im Speicherbereich 12 nach diesem anfänglichen Speicherschritt stehenden Steuergeräte-Datensätze entsprechen den ursprünglich konzipierten, noch nicht applizierten Daten. Zur Auswahl eines gewünschten Steuergeräte-Datensatzes wird gemäß einem Schritt 2 "Varianten-Kodierung" auf ein im Steuergerät 8 enthaltenes EEPROM 16 zugegriffen und diesem, vorzugsweise in kodierter Form, die zu wählende Variante, beispielsweise der gewünschte spezielle Fahrzeugtyp oder das gewünschte Performance-Muster, signalisiert. Das EEPROM 16 ist derart programmiert, daß es entsprechend der selektierten Variante auf die entsprechenden, diese Variante enthaltenden Speicherabschnitte des Speicherbereichs 12 bzw. dessen entsprechende Speicheradressen zeigt. Bei dem in Fig. 2 gezeigten Beispiel zeigt das EEPROM 16 auf die Variante 2 der Komponente 1 sowie die Variante 1 der Komponente 2, usw., die somit den zu selektierenden Steuergeräte-Datensatz repräsentieren. Um die ausgewählten Steuergerätedaten aktiv zu schalten, werden diese bei einem Verfahrensschritt 3 durch das Steuergerät 8 in den Speicherbereich 14 kopiert, so daß in diesem Speicherbereich 14 alle zur Funktionssteuerung notwendigen, selektierten Steuergerätedaten gespeichert sind. Aus dem Speicherbereich 14 stehen die dort abgelegten Steuergerätedaten dem Steuergeräteprogramm zur Verarbeitung zur Verfügung. Das Steuergeräteprogramm muß somit nicht auf die einzelnen, im Speicherbereich 12 verteilt stehenden Steuergerätedaten zugreifen, sondern findet die notwendigen Daten im Speicherbereich 14 zusammengestellt. Das Steuergeräteprogramm greift auf die Daten im Speicherbereich 14 mittels Zeigern zu, die die Adressen der einzelnen Speicherpositionen signalisieren.

Während der Entwicklungs- und Anpassungsphase müssen die Steuergerätedaten an den jeweiligen Fahrzeugtyp angepaßt werden. Dies erfolgt vorzugsweise durch Veränderung der Steuergerätedaten und Kontrollieren der Reaktionen des Kraftfahrzeugs. Damit diese Phase rasch und aussagekräftig durchgeführt werden kann, wird vorzugsweise mindestens ein Teil der Daten aus dem Speicherbereich 14 in einen RAM-Speicher 19 übernommen, so daß sie gewissermaßen "online" zur Verfügung stehen und direkt und rasch geändert werden können. Zwar ist es denkbar, sämtlich Steuergerätedaten in den RAM-Speicher 19 zu übernehmen. Hierzu ist jedoch hohe freie Speicherkapazität erforderlich. Damit auch RAM-Speicher 19 mit kleinerer freier Speicherkapazität eingesetzt werden können, wählt der Applikateur vorzugsweise vor der Datenabstimmung denjenigen Teilbereich der Steuergerätedaten, beispielsweise ein Kilobyte aus, den er abstimmen möchte. Das Steuergeräte 8 kopiert die ausgewählten Daten dann bei einem Schritt 4 aus dem Speicherbereich 14 in den RAM-Speicher 19 und schaltet ferner den für diese Daten vorgesehenen Zeiger vom Flash-Bereich 14 auf den RAM-Bereich um. Ab diesem Zeitpunkt arbeitet das Steuergeräteprogramm somit mit den im RAM-Speicher 19 vorhandenen Daten. Das Applizieren der Daten, das heißt deren Veränderung und Abstimmung mittels des Applikations-Tool-Programms erfolgt somit nun sehr rasch ohne Notwendigkeit eines applizierenden Zugriffs zum Flash-Speicher 10, siehe Verfahrensschritt 5 "Online-Applizieren mit Applikations-Tool, Adressumsetzung durch das Steuergerät". Hierbei setzt das Steuergerät 8 die anzusprechenden Adressen so um, daß die aktuell applizierten oder zu applizierenden Steuergerätedaten aus dem RAM-Speicher 19 entnommen werden, während die nicht zu applizierenden, für den Betrieb der Kraftfahrzeugfunktion, z.B. des Getriebes aber erforderlichen Daten aus dem Flash-Speicher 10 geholt werden. Sobald die Applikationsvorgänge für den im RAM-Speicher 19 gespeicherten Daten-Teilbereich abgeschlossen sind, werden die im RAM-Speicher gespeicherten, zumindest teilweise applizierten Steuergerätedaten auf Anforderung des Applikateurs wieder in den Speicherbereich 14 des Flash-Speichers zurückgeschrieben (zurückgeflasht), wobei zuvor die notwendigen Löschvorgänge des entsprechenden Flash-Sektors ausgeführt werden. Vorzugsweise erfolgt der Schritt 6 dergestalt, daß die in einem beispielsweise acht Kilobyte breiten Segment des Speicherbereichs 14 des Flash-Speichers 10 stehenden Steuergerätedaten, für die keine Applikation durchgeführt wurde, in den RAM-Speicher 19 zusätzlich zu den im RAM-Speicher 19 bereits stehenden applizierten Daten übernommen werden, so daß nun im RAM-Speicher ein vollständiger Steuergerätedatensatz (oder ein Teil eines solchen Steuergerätedatensatzes) steht, der aus den applizierten und den unverändert gebliebenen Steuergerätedaten, bezüglich derer noch keine Applikation gewünscht oder durchgeführt wurde, besteht.

Das entsprechende Segment des Speicherbereichs 14 wird dann gelöscht, wonach der im RAM-Speicher 19 stehende Datensatz in dieses Segment zurückgeschrieben wird. Dieser Vorgang kann, soweit erforderlich, für ein zweites, beispielsweise acht Kilobyte breites Segment des Speicherbereichs 14 ausgeführt werden. Im Speicherbereich 14 steht nun ein vollständiger, zumindest teilweise applizierter Steuergerätedatensatz für den entsprechenden Fahrzeugtyp. Sofern ein oder mehrere weitere Daten-Teilbereiche mit einem Umfang von beispielsweise ein Kilobyte appliziert werden sollen, können die vorstehend genannten Schritte solange wiederholt werden, bis im Speicherbereich 14 ein vollständig applizierter Steuergerätedatensatz steht.

Vorzugsweise werden die im Speicherbereich 14 stehenden, vollständig applizierten Steuergerätedaten abschließend in einem umgekehrt zum Schritt 3 erfolgenden Schritt an ihre entsprechenden Ausgangspositionen im Speicherbereich 12 zurückkopiert. Bei dem Beispiel gemäß Fig. 2 bedeutet dies, daß die Bereiche "Komponente 1, Variante 2" und "Komponente 2, Variante 1" mit den entsprechend applizierten Steuergerätedaten überschrieben werden. Bei dem nachfolgenden Kraftfahrzeugbetrieb kann der Zugriff zu dem Flash-Speicher somit gemäß dem Basisprogramm unter Zugriff auf die vom EEPROM 16 bezeichneten Abschnitte des Speicherbereichs 12 erfolgen. Es ist keinerlei Umadressierung, Umprogrammierung oder ein sonstiger Eingriff in das Steuergerät erforderlich. Dennoch wird aufgrund des Einschreibens der applizierten Steuergerätedaten an ihre Ausgangspositionen sichergestellt, daß beim nachfolgenden Steuergerätebetrieb stets auf die applizierten, das heißt optimal angepaßten Steuergerätedaten zugegriffen wird.

Sofern die insgesamt zu applizierenden Steuergerätedaten einen größeren Umfang als die Speicherkapazität des Speicherbereichs 14 aufweisen sollten, können die Schritte 3 bis 6 mit abschließender Zurückspeicherung aus dem Speicherbereich 14 in den Speicherbereich 12 auch wiederholt für Steuerdatensatz-Teilabschnitte ausgeführt werden, wobei jeweils nur ein vom Speicherbereich 14 aufnehmbarer Teilbereich der insgesamt zu applizierenden Steuergerätedaten abgestimmt wird. Das Applizieren kann somit mit insgesamt nur geringem Speicherplatzbedarf ausgeführt werden, wobei nach Abschluß der Applikation die applizierten Steuergerätedaten wieder an fester Adressenlage, entsprechend ihren ursprünglichen Adressen, nichtflüchtig abgelegt sind.

Die Erfindung erfordert somit keine Änderungen der Hardwarestruktur, so daß Original- bzw. Serien-Steuergeräte verwendbar sind. Damit sind keine speziellen, teuren Applikationsgeräte notwendig, die zudem zumindest teilweise sehr aufwendig gewechselt werden müßten. Ein weiterer Vorteil besteht darin, daß auf alle Daten generell über Zeiger (Pointer) zugegriffen wird, so daß auch variable Datenstrukturen problemlos einsetzbar und verarbeitbar sind. Das erfindungsgemäße Verfahren kann ferner sehr rasch, das heißt zeitoptimal, ablaufen, da keine laufzeiteffizienten Programmalgorithmen für den Datenzugriff benötigt werden. Auch die Applikations-Software ist relativ einfach zu handhaben, wobei gegebenenfalls auch marktübliche Applikations-Tools ohne aufwendige Tool-Änderungen eingesetzt werden können. Die Erfindung ermöglicht ferner die Verwaltung mehrere Datenvarianten in einer Steuergeräte-Software, wobei die Daten der aktuell gewählten Variante auch nach der Applikation an fester Adresse liegen. Dies ermöglicht beispielsweise einen leichten Umstieg auf eine Bandendeprogrammierung.

In weiterer Ausgestaltung der Erfindung läßt sich die Bandendekodierung der Datenvariante, mit der bei der Applikation auf das EEPROM 16 zugegriffen wird, nach der Applikation auch durch eine steuergeräteinterne Bandendeprogrammierung ersetzen, durch die erreicht wird, daß bei der späteren Betriebssteuerung auf die gleichen Speicherabschnitte des Speicherbereichs 12 zugegriffen wird, die auch bislang durch das EEPROM 16 signalisiert worden sind. Nach einer solchen Programmierung ist der EEPROM-Inhalt nicht länger notwendig und kann gelöscht oder umgeschrieben werden. Hierdurch läßt sich die Fehlersicherheit erhöhen, da eventuelle Ausfälle des EEPROMs 16 keine negativen Auswirkungen haben. Zudem bleiben auch Manipulationsversuche, bei denen der Inhalt des EEPROMs manipuliert und/oder unberechtigt gelesen werden soll, unterbunden, da solche Manipulationen oder Analyseversuche beim EEPROM weder Informationen vermitteln noch Auswirkungen auf den Steuergerätebetrieb besitzen. Bei der steuergeräteinternen Bandendeprogrammierung können beispielsweise die Zugriffsadressen des ersten Speicherbereichs 12, an denen der aktualisierte Steuerdatensatz steht, fest gespeichert werden.

## Patentansprüche

1. Verfahren zum Applizieren von Steuerdaten eines elektronischen Kraftfahrzeug-Steuergeräts (8), das einen nichtflüchtigen Speicher (10) zum Speichern der Steuerdaten aufweist, wobei
in einem ersten Speicherbereich (12) des nichtflüchtigen Speichers (10) Steuerdatensätze gespeichert sind, die jeweils einer zu steuernden Kraftfahrzeug-Komponente und/oder einem Kraftfahrzeug-Typ zugeordnet sind,
**dadurch gekennzeichnet, daß**
zum Applizieren eines Steuerdatensatzes dieser in einen zweiten Speicherbereich (14) des nichtflüchtigen Speichers (10) kopiert oder verschoben wird,
ein zu applizierender Abschnitt des Steuerdatensatzes aus dem zweiten Speicherbereich (14) in einen weiteren Speicher (19) gespeichert wird,
die zu steuernde Kraftfahrzeug-Komponente unter Zugriff auf den im weiteren Speicher (19) gespeicherten Steuerdatensatzabschnitt und ggf. auf die weiteren, im zweiten Speicherbereich (14) gespeicherten Steuerdaten gesteuert wird und die Steuerdaten des zu applizierenden Steuerdatensatzabschnitts aktualisiert werden, und
die aktualisierten Steuerdaten in den zweiten Speicherbereich (14) zurückgeschrieben werden.

2. Verfahren nach Anspruch 1, **dadurch gekennzeichnet, daß** entweder alle im zweiten Speicherbereich (14) vorhandenen Steuerdaten, oder zumindest die aktualisierten Steuerdaten, aus dem zweiten Speicherbereich (14) in den ersten Speicherbereich (12) zurückgeschrieben werden.

3. Verfahren nach Anspruch 2, **dadurch gekennzeichnet, daß** der aktualisierte Steuerdatensatz an die gleiche Stelle des ersten Speicherbereichs (12), von der der Steuerdatensatz vor seiner Applizierung ausgelesen worden ist, zurückgeschrieben wird.

4. Verfahren nach einem der vorhergehenden Ansprüche, **dadurch gekennzeichnet, daß** die zu applizierenden Steuerdaten des im zweiten Speicherbereich (14) stehenden Steuerdatensatzes abschnittsweise in den weiteren Speicher (19) übernommen, dort aktualisiert und zurückgespeichert werden, und dieser Vorgang für die nächsten, zu applizierenden, im zweiten Speicherbereich (14) stehenden Steuerdatensatzabschnitte wiederholt wird.

5. Verfahren nach einem der vorhergehenden Ansprüche, **dadurch gekennzeichnet, daß** Zeiger gesetzt werden, die auf die Adressen des zu applizierenden Steuerdatensatzes in dem zweiten Speicherbereich (14) zeigen.

6. Verfahren nach einem der vorhergehenden Ansprüche, **dadurch gekennzeichnet, daß** ein weiterer, nichtflüchtiger Speicher (16) vorgesehen ist, auf den zur Auswahl eines Steuerdatensatzes zugegriffen wird und der die Positionen, an denen der zugehörige Steuerdatensatz in dem ersten Speicherbereich (12) steht, ausgibt.

7. Verfahren nach Anspruch 6, **dadurch gekennzeichnet, daß** das Steuergerät nach Abschluß der Applikation so umprogrammiert wird, daß es unabhängig vom Inhalt des weiteren, nichtflüchtigen Speichers (16) auf die Positionen des aktualisierten, im ersten Speicherbereich (12) stehenden Steuerdatensatzes zugreift.

## Claims

1. Method for applying control data for an electronic motor vehicle control unit (8) which has a non-volatile memory (10) for storing the control data, where
a first memory area (12) of the non-volatile memory (10) stores control data records which are respectively associated with a motor vehicle component which is to be controlled and/or with a motor vehicle type,
**characterized in that**
a control data record is copied or shifted to a second memory area (14) of the non-volatile memory (10) in order to apply the said control data record,
a section of the control data record from the second memory area (14) which is to be applied is stored in a further memory (19),
the motor vehicle component which is to be controlled is controlled by accessing the control data record section stored in the further memory (19) and possibly by accessing the further control data stored in the second memory area (14), and the control data of the control data record section which is to be applied are updated, and
the updated control data are written back to the second memory area (14).

2. Method according to Claim 1, **characterized in that** either all the control data present in the second memory area (14) or at least the updated control data are written back to the first memory area (12) from the second memory area (14).

3. Method according to Claim 2, **characterized in that** the updated control data record is written back to the same point in the first memory area (12) from which the control data record had been read before it was applied.

4. Method according to one of the preceding claims, **characterized in that** the control data of the control data record located in the second memory area (14) which are to be applied are transferred in sections to the further memory (19), are updated there and are stored back, and this operation is repeated for the next control data record sections located in the second memory area (14) which are to be applied.

5. Method according to one of the preceding claims, **characterized in that** pointers are set which point to the addresses of the control data record to be applied in the second memory area (14).

6. Method according to one of the preceding claims, **characterized in that** a further, non-volatile memory (16) is provided which is accessed for the purpose of selecting a control data record and which outputs the positions at which the associated control data record is located in the first memory area (12).

7. Method according to Claim 6, **characterized in that**, when the application has terminated, the control unit is reprogrammed such that it accesses the positions of the updated control data record located in the first memory area (12) irrespective of the content of the further, non-volatile memory (16).

## Revendications

1. Procédé pour l'application de données de commande d'un appareil de commande électronique de véhicule automobile (8), qui présente une mémoire non volatile (10) pour mémoriser les données de commande,
des jeux de données de commande, qui sont affectés respectivement à un composant de véhicule automobile à commander et/ou à un type de véhicule automobile, étant mémorisés dans une première zone de mémoire (12) de la mémoire non volatile (10),
**caractérisé en ce que**
pour l'application d'un jeu de données de commande celui-ci est mémorisé ou transféré dans une seconde zone de mémoire (14) de la mémoire non volatile (10),
une section à appliquer du jeu de données de commande provenant de la seconde zone de mémoire (14) est mémorisée dans une autre mémoire (19),
le composant de véhicule automobile à commander est commandé moyennant accès à la section de jeu de données de commande mémorisées dans l'autre mémoire (19) et le cas échéant aux autres données de commande mémorisées dans la seconde zone de mémoire (14) et les données de commande de la section du jeu 'de données de commande à appliquer sont actualisées, et
les données de commandes actualisées sont réécrites dans la seconde zone de mémoire (14).

2. Procédé selon la revendication 1, **caractérisé en ce que** soit toutes les données de commande présentes dans la seconde zone de mémoire (14), soit au moins les données de commande actualisées, sont réécrites de la seconde zone de mémoire (14) dans la première zone de mémoire (12).

3. Procédé selon la revendication 2, **caractérisé en ce que** le jeu de données de commande actualisé est réécrit à la même position de la première zone de mémoire (12), d'où le jeu de données de commande a été extrait avant son application.

4. Procédé selon l'une des revendications précédentes, **caractérisé en ce que** les données de commande à appliquer du jeu de données de commande présent dans la seconde zone de mémoire (14), sont reprises par section dans l'autre mémoire (19), y sont actualisées et remises en mémoire, et **en ce que** cette opération est répétée pour les sections de jeux de données de commande suivantes à appliquer et présentes dans la seconde zone de mémoire (14).

5. Procédé selon l'une des revendications précédentes, **caractérisé en ce que** des pointeurs, qui pointent sur les adresses du jeu de données de commande à appliquer dans la seconde zone de mémoire (14), sont placés.

6. Procédé selon l'une des revendications précédentes, **caractérisé en ce qu'**une autre mémoire non volatile (16) est prévue, à laquelle il est accédé pour sélectionner un jeu de données de commande et qui émet les positions où se trouve le jeu de données de commande afférent dans la première zone de mémoire (12).

7. Procédé selon la revendication 6, **caractérisé en ce que** l'appareil de commande est reprogrammé à la fermeture de l'application de telle manière qu'il accède aux positions du jeu de données de commande actualisé se trouvant dans la première zone de mémoire (12) indépendamment du contenu de l'autre mémoire non volatile (16).
